# EUROPEAN PATENT APPLICATION

(11) **EP 1 178 348 A1**
(43) Date of publication of application: **06.02.2002**
(21) Application number: 01113043.2
(22) Date of filing: 29.05.2001
(51) Int. Cl.: G02C 5/22

(54) **Spectacle frame with improved flex-type temple bars**

(30) Priority: 31.07.2000 IT PN000047
(71) Applicant: Oros S.r.l., 35012 Camposampiero, Padova (IT)
(72) Inventor: Bolzonello, Aldo, 32030 Quero, Belluno (IT)
(74) Representative: Busca, Luciano

(57) **Abstract**

Each temple bar (1) is connected to the face (2) of the spectacles via a respective hinge (3) that is coupled to an extra-opening mechanism comprising an enclosure (4) attached to the temple bar. An extension spring (14) extends in a through-hole (10) of the enclosure (4) and comprises a hook-shaped front end portion (15), which is surrounded by a containment ring (8) protruding from the front end portion of the enclosure (4) so as to form an eyelet (9) along which there is adapted to slide a pin (23) of said hinge (3) as engaged by said hook (15).

## Description

The present invention refers to a frame for spectacles that is provided with improved flex-type temple bars.

As generally known, temple bars are commonly said to be of the so-called flex-type in the particular case in which said temple bars for spectacles are provided with an articulated joint comprising a mechanism which allows for the same temple bar to not only fold back against the remaining portion of the spectacles when closing, but also to reach out elastically to a so-called extra-opening position from which the same mechanism is capable of pulling, ie. returning the bar into its resting position, ie. in the position in which it is aligned with the face or front portion of the spectacles.

Each such elastic joint comprises a box-like enclosure that is welded on to the temple bar in correspondence of a side wall thereof and houses a set of component parts that are adapted to both bring about the above cited elastic return action and sustain a hinge used to connect the temple bar with the face of the spectacles.

Usually, the above cited box-like enclosure used in connection with flex-type temple bars is of the substantially closed type and is provided with an axial dead hole in which there is capable of sliding a slide which, under extra-opening conditions, overcomes the force of a compression spring that is also housed in said enclosure. The mechanism requires the provision of abutment locating and retaining means in the enclosure, so that a variety of mechanical machining and processing operations must be carried out inside the dead hole in view of obtaining particularly shaped and/or depressed portions thereof, which of course turn out to be particularly critical and expensive when performed on an industrial scale.

Furthermore, the assembly of the various component parts inside said box-like enclosure is undesirably painstaking and laborious.

These problems are further aggravated by the small dimensions of said component parts which on the other hand, owing to reasons of lightness and aesthetical considerations, should desirably be made as minute as possible in their size.

It therefore is a main purpose of the present invention to provide a frame for spectacles with improved flex-type temple bars, which is capable of being manufactured with the use of a reduced number of component parts requiring just a few simple and inexpensive mechanical machining and processing operations.

A further aim of the present invention is to provide a frame for spectacles of the above cited kind, in which the component parts are capable of being easily assembled in the respective box-like enclosures, and possibly disassembled therefrom, in a quick and convenient manner.

A further purpose yet of the present invention is to provide a frame for spectacles of the above cited kind, in which the flex-type temple bars have advantageously reduced dimensions and weight.
According to the present invention, these aims are reached in a frame for spectacles with improved flex-type temple bars embodying the characteristics recited in the appended claims.

The features and advantages of the present invention will anyway be more readily and clearly understood from the description that is given below by way of non-limiting example of some embodiments thereof with reference to the accompanying drawings, in which
- Figure 1 is an exploded, partially cross-sectional view of the main component parts that can be used on a flex-type temple bar of the spectacle frame, in a preferred embodiment of the present invention;
- Figure 2 is an exploded view similar to the one illustrated in Figure 1, in which the component parts are partially sectioned along a plane that is orthogonal to the one of Figure 1;
- Figures 3 and 4 are cross-sectional views of the component parts shown in Figures 1 and 2, as assembled and attached to the spectacle frame according to the present invention, in respective operating positions thereof;
- Figure 5 is a view of the component parts shown in Figure 3, however partially sectioned along a plane that is orthogonal to the one of Figure 3.

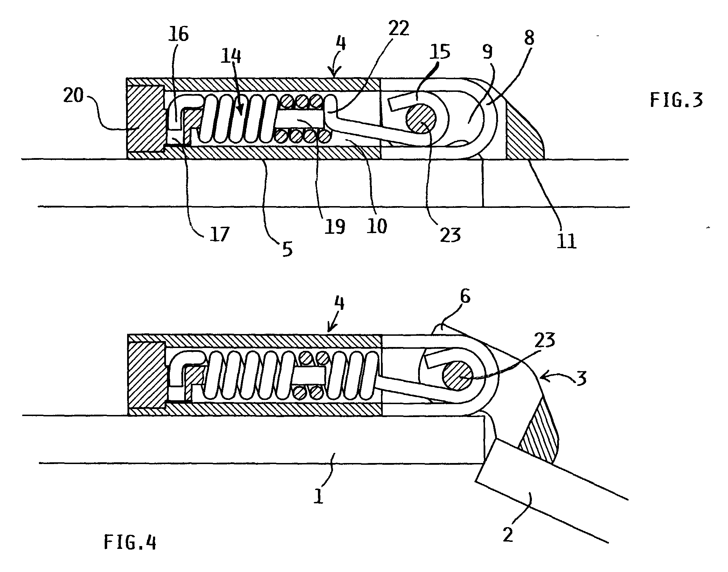

With particular reference to Figures 3 to 5, the spectacle frame comprises a pair of temple bars 1, each one of which is connected to the face or front portion 2 of the spectacles via a respective hinge 3 and a flex mechanism that shall be described in greater detail further on.

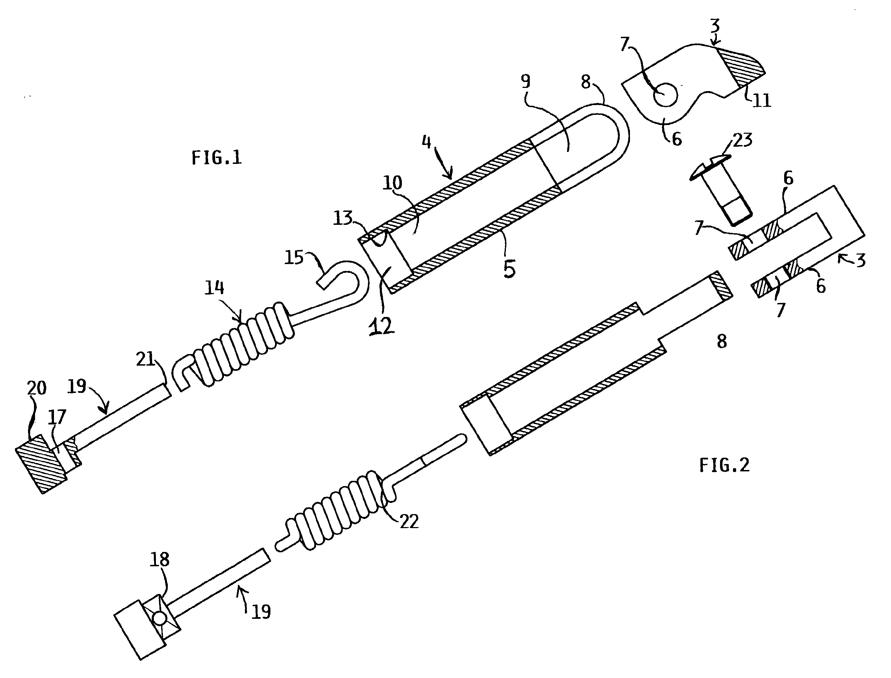

Referring also to Figures 1 ands 2, the flex mechanism can be noticed to mainly comprise a box-like enclosure 4 having a substantially closed side surface, inside which there is provided a longitudinal through-hole 10. In particular, the enclosure 4 comprises a side wall 5 in correspondence of which it is attached, preferably by welding, to a respective temple bar 1.

Accordingly, the hinge 3 is attached to the face 2 in correspondence of an extremity 11, from which it extends, preferably in a fork-shaped manner, as shown in Figure 2, with arms 6 provided with aligned holes 7, at least one of which is threaded.

The front extremity of the enclosure 4 is so shaped as to feature at least a protruding ring 8, or the like, delimiting an elongated eyelet 9.

The rear extremity of the enclosure 4 is substantially open, with an enlarged axial portion 12 of the hole 10 that defines a kind of perimetrical shoulder 13.

The enclosure 4 is adapted to axially accommodate in the hole 10 an extension spring 14 that is shaped to feature a hook-shaped front extremity 15 and a cross rear end portion 16 that is adapted to latch on to a corresponding cross hole 17 provided in an enlarged, preferably asymmetric portion 18 of a pin 19. The latter further comprises, at the back of said enlarged portion 18 thereof, an abutment head 20.

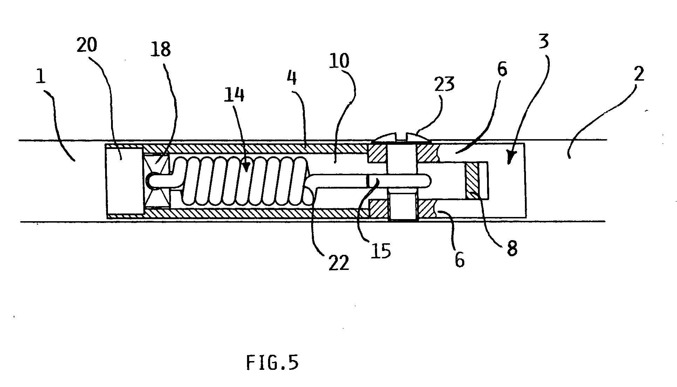

The pin 19 is adapted to get axially inserted in the interior of the extension spring 14 and is so sized as to ensure that, when the end portion 16 of the same spring is hooked on to the cross hole 17, the front end portion 21 of the pin moves into abutting frontally against a front shoulder 22 of the same spring. In an advantageous manner, therefore, when in its resting position (Figure 3) the extension spring 14 is actually pre-assembled on the pin 19 in such a pre-tensioned state as to favour a convenient assembly of the various component parts.
The assembly that is so formed by the pin 19 and the spring 14 can be most easily inserted axially in the hole 10 of the enclosure 4 until the head 20 of the pin 19 eventually abuts against the shoulder 13 and the front end portion 15 of the spring 14 moves into position in correspondence of the eyelet 9, as this is best shown in Figures 3 and 5.

At this point, the ring 8 of the enclosure 4 can be inserted between the arms 6 of the hinge 3 so as to bring the holes 7 thereof into alignment with the hook-shaped end portion 15 of the spring 14, in which a retaining screw 23 can then be conveniently inserted.

Quite apparent is at this point the construction and assembly simplicity of the component parts forming the flex mechanism of the spectacle frame according to the present invention.

In particular, the few component parts that are actually needed to build such a mechanism have unvaryingly an elementary conformation, so that they can most advantageously be adequately minute in their size, ie. of low encumbrance, and lightweight.

Furthermore, the above cited component parts do not require any crtical processing or machining operation; so, for instance, the hole 10, 12 of the enclosure 4 does not include any inner portion that needs to be depressed or shaped in a relatively complex manner.

The possibility should also be duly noticed for the entire flex mechanism to be disassembled, in view of possibly required repair and/or maintenance operations, with an extremely simple operation requiring practically the sole removal of the screw 23.

When used in normal utilization conditions, the temple bars 1 of the spectacles are aligned with the face or front part 2 thereof, as this is best illustrated in Figures 3 and 5; the temple bars 1 can of course be folded down into corresponding resting or non-utilization positions by a simple rotation (upwards, in Figure 3) about the hinge pin formed by the retaining screw 23.

When on the contrary the temple bars 1 are forced into their extra-opening position, they can rotate elastically about the pin 23 which translates, ie moves axially and, by doing this, causes the front end portion 15 of the extension spring 14 to displace up to a limit stop (shown in Figure 4) defined by the hook 15 abutting against the ring 8 of the enclosure 4.

In this connection, the hook 15 of the extension spring and the ring 8 of the enclosure 4 preferably extend on the same plane and the hook 15 is inserted in the eyelet 9 with a minimum of slack. In an advantageous manner, therefore, the ring 8 acts also as a safety provision to prevent the hook 15 from opening out accidentally when the extension spring 14 is subjected to tensile stress by the translation of the hinge pin 23.

As anyone skilled in the art is readily capable of appreciating, the above feature is a quite important one, since it enables a spring 14 made of particularly thin, light and low-encumbrance metal wire to be used without problems or drawbacks of any kind.

Similarly, also the cross end portion 16 of the extension spring 14 is advantageously and effectively prevented from loosening accidentally, thanks to the fact that the same spring is preferably inserted with a minimum slack in the hole 10 of the enclosure 4.

It will of course be appreciated that the above described spectacle frame may be the subject of a number of modifications, such as for example in connection with the type of materials used, without departing from the scope of the present invention.

In addition, any equivalent abutment member may be used instead of said containment ring 8 to form the limit stop for the front end portion 15 of the extension spring 14.

## Claims

1. Spectacle frame with improved flex-type temple bars, in which each temple bar (1) is connected to the face (2) of the spectacles via a respective hinge (3) that is coupled to a mechanism comprising a box-like enclosure (4) attached to the temple bar and housing elastic return means that allow for the same temple bar to be brought to an extra-opening position, **characterized in that** said elastic return means comprise an extension spring (14) that extends axially in a through-hole (10) of the box-like enclosure (4) and is shaped with a hook-shaped or similar front end portion (15), which is substantially surrounded by at least a containment ring (8), or the like, protruding from the front end portion of the enclosure (4) so as to form an elongated eyelet (9) along which there is adapted to slide a pin (23) of said hinge (3) as engaged by said hook (15).

2. Spectacle frame according to claim 1, **characterized in that** said extension spring (14) has a rear end portion (6) engaging a pin (19) that extends axially inside said same spring (14) and is provided with a front end portion (21) adapted to abut against a front shoulder (22) of the spring, in such a manner as to keep said spring under substantial pre-tensioning conditions when the mechanism (4-23) is in its resting position.

3. Spectacle frame according to claim 2, **characterized in that** said pin (19) is provided at the back with an enlarged head (20) that is adapted to abut against a shoulder (13) provided in correspondence of said hole (10) of the box-like enclosure.

4. Spectacle frame according to claim 1, **characterized in that** said hook-shaped end portion (15) of the extension spring (14) is aligned with at least a hole (7) of the hinge (3), in which a hinge pin (23) is inserted in said hook-shaped end portion and in said hole (7).

5. Spectacle frame according to claim 4, **characterized in that** said hinge pin (23) is conformed as a removable retaining screw.

6. Spectacle frame according to claim 4, **characterized in** said hinge (3) is substantially in the shape of a fork, with arms (6) between which said hook-shaped end portion (15) of the extension spring (14) and said containment ring (8) are able to extend.

7. Spectacle frame according to claim 2, **characterized in that** said rear end portion of the extension spring (14) comprises a cross portion (16) of the same spring which is hooked on in a corresponding cross hole (17) of said pin (19).

8. Spectacle frame according to claim 7, **characterized in that** said hook-shaped end portion (15) and said rear end portion (16) of the extension spring (14) are inserted with a minimum slack in said containment ring (8) and said through-hole (10), respectively, so as to prevent them from loosening off accidentally.
